(19) Europäisches Patentamt
European Patent Office
Office européen des brevets

(11) **EP 2 159 978 A1**

(12) **EUROPEAN PATENT APPLICATION**

(43) Date of publication:
**03.03.2010 Bulletin 2010/09**

(51) Int Cl.:
***H04L 25/03*** (2006.01)

(21) Application number: **08015070.9**

(22) Date of filing: **26.08.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Nokia Siemens Networks Oy**
**02610 Espoo (FI)**

(72) Inventors:
• **Kim, Jee Hyun**
  **81371 München (DE)**

• **Schulz, Egon, Dr.**
  **80993 München (DE)**
• **Zirwas, Wolfgang**
  **81249 München (DE)**

(74) Representative: **Weidel, Gottfried**
**Nokia Siemens Networks GmbH & Co. KG**
**COO RTP IPR / Patent Administration**
**80240 München (DE)**

(54) **Adaptive codebook with compressed feedback**

(57)    It is described a feedback sending station (MS 1,....MS $N_{MS}$) comprising a message generator for generating a feedback message ($i_1,...i_{N_{MS}}$) indicating a channel state ($C_{i_1},...C_{iN_{MS}}$) by using a codebook containing a plurality of codes, wherein each of said plurality of codes is indicative of a corresponding channel state. The feedback message (($i_1$) refers to one code of said plurality of codes as a feedback code and has a bit length which depends on a probability for a transition from a currently used code to said feedback code to which the feedback message refers. A feedback receiving station (BS 1,...., BS $N_{BS}$) comprises a code selector for selecting a corresponding feedback code out of said codebook depending on both said code indicating element and a currently used code.

FIG 1

$$\hat{H} = \begin{bmatrix} C_{i_1} & \cdots & C_{iN_{MS}} \end{bmatrix}^T \qquad H = \begin{bmatrix} H_1 & \cdots & H_{N_{MS}} \end{bmatrix}^T$$

**Description**

Field of invention

The present invention relates to the field of reporting channel information from a feedback sending station to a feedback receiving station. In particular, the present invention relates to the field of reporting channel information from a mobile station to a network, e.g., a base station of a mobile telecommunications system.

Art Background

Recently spatial multiplexing emerged as a promising scheme to fulfill the data rate requirements of future wireless services. A technique to make spatial multiplexing more robust to rank deficient channels and to allow for simpler receiver architectures is linear precoding. The optimal precoder is calculated as a function of the channel state information (CSI). However, since CSI is in general only available at the receiver, it needs to be fed back to the transmitter.

To feed back precoder/channel information over a band limited feedback link, a codebook consisting of a set of quantized precoders/channel information can be used. Such a codebook is generally designed using some distortion measure, and the chordal distance is one of the most widely used distortion measures. On the other hand, a selection measure is required that maps the channel to a specific code. This selection measure could be similar to the distortion measure, even though this does not always have to be the case.

The codebook based feedback is incorporated in some wireless communication system standards, e.g., 3GPP Long Term Evolution (LTE), IEEE 802.16e mobile WiMAX, etc. The subject matter disclosed herein, therefore, is directly applicable to 3GPP LTE or WiMAX system and can have an enormous impact in improving the system performance of the 3GPP LTE/WiMAX systems.

There may be a need for further improving the codebook-based feedback in order to save feedback resources.

Summary of the Invention

This need may be met by the subject matter according to the independent claims. Advantageous embodiments of the present invention are described by the dependent claims.

According to a first aspect of the invention there is provided a feedback sending station comprising a message generator for generating a feedback message indicating a channel state by using a codebook which contains a plurality of codes and wherein each of said plurality of codes is indicative of a corresponding channel state. The feedback message refers to one code of said plurality of codes as a feedback code and has a bit length which depends on a probability for a transition from a currently used code to said feedback code to which the feedback message refers.

According to an illustrative embodiment, the term "currently used" means currently used for description of the channel.

According to a further illustrative embodiment, the currently used code is a code that has previously been reported for providing channel state information (CSI).

According to a further illustrative embodiment, the feedback sending station is a mobile station, e.g., a cell phone or a portable computer. According to a further illustrative embodiment, the feedback receiving station is a network, e.g., a base station of a mobile communications network.

According to a further embodiment of the first aspect, the feedback message contains a code indicating element which represents said feedback code in the case that the feedback sending station currently uses said currently used code. According to a further illustrative embodiment, the bit length of the code indicating element of the feedback code depends on the probability for a transition from said currently used code to said feedback code. According to a further illustrative embodiment, a code indicating element is an index or compressed index of one code of the codebook. According to an illustrative embodiment, a compressed index is obtained by lossless data compression.

According to a still further illustrative embodiment of the first aspect, the feedback sending station further comprises a storage device for storing therein an indicator set of code indicating elements. Each of the code indicating elements of the indicator set represents one code of the codebook, i.e., of the plurality of codes, in the case that the feedback sending station currently uses the currently used code. According to another illustrative embodiment, each code indicating element in said indicator set has a bit length which depends on a probability for a transition from the currently used code to respective code associated with the code indicating element.

According to a still further embodiment, the storage device has stored therein an indicator set of code indicating elements for each of said codes of said plurality of codes wherein each indicator set refers to a different one of said codes as a reference code. According to an illustrative embodiment, each of the code indicating elements of an indicator set represents one code of said codebook in the case that feedback sending station currently uses the reference code of this indicator set as the currently used code. According to a still further illustrative embodiment, in each indicator set each of the code indicating elements has a bit length which depends on a probability for a transition from the reference code to respective code associated with the code indicating element. According to a still further illustrative embodiment, each indicator set comprises a code indicating element for each code of said codebook.

In one example which includes several of the above mentioned embodiments, if the codebook has N codes then N indicator sets are provided, wherein each indicator set has N code indicating elements. Hence, in this example, each indicator set provides an unique link in form of a respective code indicating element for each of the codes of the codebook. However, according to other embodiments each indicator set comprises code indicating elements of only part of the codes of the codebook, namely of the codes which have the highest probability for a transition from the reference code to respective code associated with the code indicating element.

According to an illustrative embodiment of the first aspect, the code indicating elements of one indicator set are stored in a table and are sorted according to the probability for a transition from the reference code of the indicator set to respective code associated with the code indicating element.

According to an illustrative embodiment, the statistical frequency of codes referred to in a feedback message decreases with increasing code index, at least for the codes with the highest statistical frequency.

According to an illustrative embodiment, no feedback message is generated if the currently used code remains unchanged.

According to a second aspect of the invention a feedback receiving station is provided wherein the feedback receiving station comprises a receiver for receiving a feedback message containing a code indicating element and a codebook containing a plurality of codes. The feedback receiving station further comprises a code selector for selecting a corresponding feedback code out of said codebook depending on both, said code indicating element and a currently used code.

According to a further illustrative embodiment, the code indicating element represents the selected feedback code in the case that feedback sending station currently uses said currently used code. Selecting said corresponding code requires the currently used code. In other words, the corresponding code is defined by both, the code indicating element and the currently used code.

According to a further illustrative embodiment, the feedback receiving station further comprises a storage device having stored therein an indicator set of code indicating elements for each of said codes of said plurality of codes wherein each indicator set refers to a different one of said codes as a reference code. Further, each of the code indicating elements of an indicator set represents one code of said plurality of codes of the codebook in the case that feedback sending station currently uses the reference code of this indicator set as the currently used code. According to a further illustrative embodiment, in each indicator set each of the code indicating elements has a bit length which depends on a probability for a transition from the reference code to respective code associated with the code indicating element. According to a further illustrative embodiment, each indicator set comprises a code indicating element for each code of said codebook.

According to a further illustrative embodiment, the feedback receiving station further comprises a set selector for selecting an indicator set out of said indicator sets wherein the reference code of the selected indicator set is the code which is currently used by the feedback receiving station. The code selector is configured for selecting said feedback code out of said codebook by using the selected indicator set.

According to a further illustrative embodiment, the feedback receiving station according to the second aspect further comprises a transmitter for sending to a feedback sending station at least one indicator set of code indicating elements. In each of the (at least one) indicator sets each code indicating element represents one code of said plurality of codes in the case that said feedback sending station uses a reference code of the indicator set as the currently used code. According to a further illustrative embodiment, in each of the (at least one) indicator sets each code indicating element has a bit length which depends on a probability for a transition from the reference code to the respective code associated with the code indicating element.

According to a further illustrative embodiment the probability for a transition from said currently used code to said feedback code is represented by a distance of the feedback code and the currently used code in a metric used for codebook construction of said codebook.

According to a further illustrative embodiment each code indicating element is a compressed code index obtained with a source coding scheme, e.g., a lossless source coding scheme, wherein code indices are associated with descriptions that are the shorter the higher the probability is for a transition from the currently used code to the respective code associated with the code index.

According to a third aspect, a method for indicating a channel state with a feedback message is provided, the method comprising (i) providing a codebook containing a plurality of codes, wherein each of said plurality of codes is indicative of a corresponding channel state, and (ii) generating said feedback message by assigning to said feedback message a code indicating element representing a desired feedback code which best describes the current channel state, wherein the bit length of the code indicating element of the feedback code varies according to on a probability for a transition from a currently used code to said feedback code.

According to an embodiment of the third aspect, the method further comprises retrieving an indicator set of code indicating elements, wherein said indicator set has said currently used code as a reference code and selecting from said indicator set the code indicating element which corresponds to the feedback code. According to an illustrative embodiment, each code indicating element of said indicator set represents one code of said codebook in the case that feedback sending station currently uses said reference code. According to a further illustrative embodiment, each code indicating element in said indicator set has a bit length which depends on a probability for a transition from a reference code of the indicator set to respective code associated with the code indicating element.

According to a fourth aspect, a method for decoding a feedback message containing a code indicating element is provided. The method comprises (i) providing a codebook which contains a plurality of codes each of which is indicative of a corresponding channel state, and (ii) selecting, as a feedback code, a code out of said codebook depending on both, a currently used code and said code indicating element.

According to an embodiment of the fourth aspect, the method further comprises retrieving an indicator set of code indicating elements. The indicator set refers to the current code as a reference code. Each of the code indicating elements of said indicator set represents one code of said plurality of codes in the case that the current code is the reference code of the indicator set. According to a further embodiment, the method comprises selecting said feedback code by using said indicator set.

An aspect of the herein disclosed subject matter is based on the idea that the most probable code in the next time stamp is associated with the smallest code indicating element. By feeding back only the code indicating element, the required feedback resource can be reduced.

In the following there will be described exemplary embodiments of the present invention with reference to a feedback sending station and a feedback receiving station. It has to be pointed out that of course any combination of features relating to different subject matters is also possible.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters or embodiments, for example even between features of the apparatus type claims and features of the method type claims is considered to be disclosed with this application.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Fig. 1 shows a wireless communication system in the form of a downlink multi-user MIMO system with limited feedback according to illustrative embodiments of the herein disclosed subject matter.

Fig. 2 shows a wireless communication system according to illustrative embodiments of the herein disclosed subject matter.

Fig. 3 shows a further wireless communication system according to illustrative embodiments of the herein disclosed subject matter.

Fig. 4 shows a typical code index behavior over time for a conventional wireless communication system.

Fig. 5 shows a typical adaptive code index behavior over time according to illustrative embodiments of the herein disclosed subject matter.

Fig. 6 shows an adaptive codebook index encoding example according to illustrative embodiments of the herein disclosed subject matter.

Fig. 7 shows a cooperative area topology based on a 3-sector-cell system according to illustrative embodiments of the herein disclosed subject matter.

Fig. 8 shows an adaptive code index histogram for a mobile station velocity of $v_{MS}$ = 3 m/s and a 10-bit codebook according to illustrative embodiments of the herein disclosed subject matter.

Fig. 9 shows an adaptive code index histogram for a mobile station velocity of $v_{MS}$ = 10 m/s and a 10-bit codebook according to illustrative embodiments of the herein disclosed subject matter.

Detailed Description

The illustration in the drawings is schematic. It is noted that in different figures, similar or identical elements are provided with the same reference signs or with reference signs, which are different from the corresponding reference signs only within the first digit.

Exemplary embodiments of the herein disclosed subject matter are developed for wireless communication systems which have one or more of the following features.

One example of a wireless communication system is downlink MU-MIMO systems with transmit filtering. The proposed method is especially applicable to the downlink transmission which involves a transmit filtering (precoding) for a base station (BS) to form independent beams for individual users. Even though it is suitable for general MU-MIMO systems, it can cover less sophisticated systems in terms of the number of supportable users at one time and the number of receive antennas. Applicable system configurations may be single user (SU) systems or multiple user (MU) systems. Single user systems include systems with a single Rx antenna (SU-MISO) and systems with multiple Rx antennas (SU-MIMO). Multi user systems include systems with a single Rx antenna (MU-MISO) and systems with multiple Rx antennas (MU-MIMO).

A further embodiment of a wireless communication system is a limited feedback system based on codebook. Herein a BS needs channel state information (CSI) in order to calculate the precoding matrix for the transmit filtering process. In most cases, this information is not available at the BS side and it should therefore be transmitted from the mobile station (MS) to the BS. Illustrative embodiments of the herein disclosed subject matter are developed for the limited feedback system which is based on codebook. The MS estimates the downlink channel, which is in the matrix form (MIMO channel) or in the vector form (MISO channel), and selects the most suitable code from the predefined codebook. The code selection criterion is based on the distance measure which calculates the distance (positive real scalar value) between two input matrices (the channel matrix and the code matrix of the same size).

According to an illustrative embodiment, the wireless communication system comprises a distributed cooperative antenna (COOPA) system as a reference system, which can be regarded as a MU-MIMO system with distributed organization. The chordal distance is taken as a code selection criterion. However, the proposed method can be applicable to systems which retain the features mentioned above, and is not limited to distributed COOPA systems.

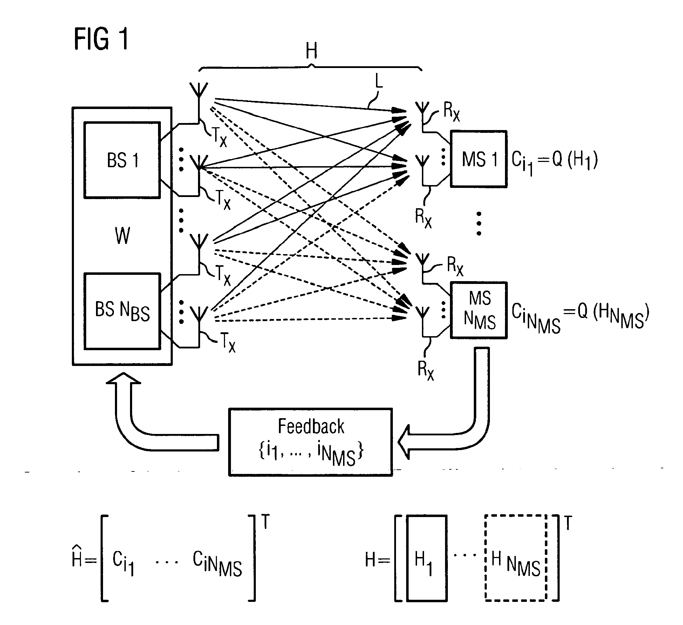

Fig. 1 shows a block diagram of an exemplary wireless communication system having $N_{BS}$ base stations BS 1 ... BS $N_{BS}$ and $N_{MS}$ mobile stations MS 1 ... MS $N_{MS}$. Each base station has at least one transmit antenna $T_x$ and each mobile station has at least one receive antenna $R_x$. The arrows in Fig. 1 indicate respective links from the transmit antennas $T_x$ of the base stations to the receive antennas $R_x$ of the mobile stations, one of which links is exemplarily indicated by L. The system is a distributed COOPA system which adopts a subspace based channel quantization method. The $N_{BS}$ base stations (BS) need overall downlink channel state information H for the calculation of the precoding matrix W so as to form multiple spatial beams which enable independent and decoupled data streams for $N_{MS}$ users. The individual user j estimates its portion of the channel $H_j$ and quantizes it by finding the best candidate from the predefined set of codes $C_i$ (channel quantization codebook). The index of the chosen code $i_j$ is sent back to the BSs through the limited feedback channel. The BSs reconstruct the channel matrix $\hat{H}$ by looking up the codebook, which is shared by transmitters and receivers. This reconstructed channel matrix is used for the calculation of the precoding matrix W. In the case of a single user system, the user can directly select the precoding matrix (precoding codebook). In any case, the feedback information, which is either channel quantization code index or precoding code index, is dependent on the downlink channel H. The channel information is in most cases temporally correlated, and this can be exploited in order to reduce the feedback amount.

Since the precoder is generally restricted to be unitary it is beneficial to feed back the quantized precoder instead of the quantized channel in case of the single user multiple input multiple output (SU-MIMO) system. For multiple user MIMO (MU-MIMO) systems, a method is proposed for mobile stations (MS) to quantize the channel and to feed back the quantized CSI to the base station (BS) so that the transmitter can calculate a precoding matrix with inter user interference being taken into account. According to an illustrative embodiment, the channel quantizer may take the channel directional information (CDI) as input, which is restricted to be unitary. Both methods (precoder selection and channel quantization), hence, are supposed to send back an unitary matrix as feedback in these embodiments.

Codebook is introduced to the downlink MIMO system with transmit filtering in an effort to reduce the feedback amount. The amount of feedback, however, can be still very high in case we need a very high resolution codebook. For example, MU-MIMO systems require in general a large size codebook in order to eliminate inter-user interferences which do not need to be considered for SU-MIMO systems. Our simulation result indicates that the distributed COOPA system consisting of 2 BSs and 2 MSs with single antenna ($H_j \in £^{2x1}$), wherein £ denotes the set of complex numbers, requires 10 bit codebook ($|C^a| = 2^{10}$) to perform closely to the reference case with perfect channel knowledge at BSs (0.7 dB degradation in terms of 50 % outage SINR). In this case, even the feedback index transmission can be quite burdensome. One possible solution for this problem is to make use of temporal correlation of the channel. Feedback overhead can be greatly reduced by exploiting the temporal correlation of the channel. In a real operation scenario, a MS retains its connection with a BS for a certain period of time. During this period, the MS is transmitting to the BS control signals as well as data signals. As a part of control signals, feedback signal which pertains to the downlink channel state information keeps being sent through the uplink in an effort to maintain that the precoding matrix at the BS is up to date with the downlink channel. The channel changes over time, but the similarity of the channel responses taken at different times within the coherence time is very high. This similarity of temporally adjacent feedback signals can be exploited so as to reduce the feedback overhead by approaching this problem as a data compression issue which has been dealt with in the source coding or vector quantization research. The adaptive feedback scheme is hereby proposed as a way of compressing feedback data for temporally correlated channels. The inventive methods according to the herein disclosed subject matter can be applied to a multi-carrier transmission system as well, e.g., OFDM, to exploit the correlation of the channel over adjacent subcarriers.

According to illustrative embodiments of the herein disclosed subject matter, an adaptive feedback encoding scheme is introduced which in effect sorts codebook entries according to their transition probabilities with respect to the current codebook entry. As a result, the codebook entries are adaptively reordered in the decreasing order of the transition probability. The most probable code in the next time stamp is placed in the earliest part of the codebook, and so on. This feature leads to the same order of occurrence frequency as the code index. It means that code index 1 is reported most frequently, and is followed by code index 2, 3, ..., in order. This allows for consulting source-coding schemes for data compaction. It allocates small number of bits to the frequently observed code index and more bits to the less frequent code indices. The required feedback resource can be greatly reduced by adopting the proposed methods.

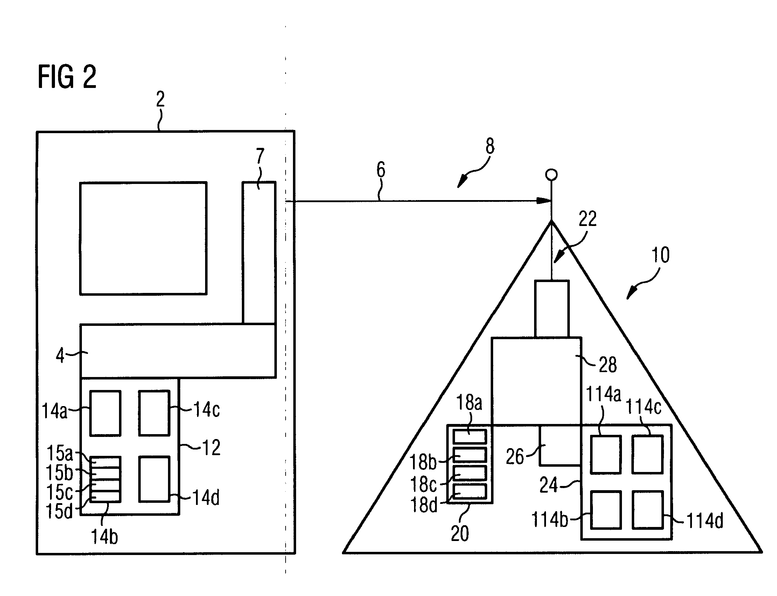

In order to provide a better understanding of the principles of the herein disclosed subject matter, reference is made to Fig. 2 which shows a simplified exemplary wireless communication system embodying illustrative embodiments.

A feedback sending station 2 comprises a message generator 4 for generating a feedback message 6 which is transmitted by a transmitter 7 over a channel 8 between the feedback sending station 2 and a feedback receiving station 10. The feedback message 6 indicates a channel state of the channel 8 by using or referring to a codebook containing a plurality of codes, wherein each of said plurality of codes is indicative of a corresponding channel state of the channel 8. The feedback message 6 refers to one code that best describes the channel state determined by the feedback message sending station 2 as a feedback code. The feedback message has a bit length which depends on a probability for a transition from a currently used code to said feedback code to which the feedback message 6 refers.

The feedback message 6 contains a code indicating element which represents the feedback code in the case that the feedback sending station 2 currently uses said currently used code. The feedback sending station 2 comprising a storage device 12 which has stored therein an indicator set 14a, 14b, 14c, 14d of code indicating elements for each of said codes of said codebook. Further, of one indicator set 14b, the code indicating elements of one indictor set 14b are exemplarily indicated with reference signs 15a, 15b, 15c, 15d. It should be understood that, while in Fig. 2 four indicator sets are shown, this number of indicator sets is chosen for illustrative purposes only and that according to realistic codebooks hundreds or thousands of different codewords and hence indicator sets may be provided.

Each indicator set 14a, 14b, 14c, 14d refers to a different one of said codes as a reference code. Each of the code indicating elements of each of the indicator sets 14a, 14b represents one code of said codebook in the case that feedback sending station currently uses the reference code of this indicator set as the currently used code. For example, each of the code indicating elements 15a, 15b, 15c, 15d of the indicator set 14b represents one code of said codebook in the case that feedback sending station currently uses the reference code of this indicator set 14b as the currently used code.

It should be noted that the feedback sending station 2 does not necessarily include the reference code as such. Rather, according to an illustrative embodiment, only the code indicating element 15a which represents the reference code of the respective indicator set 14b is stored in the feedback sending station 2.

According to an illustrative embodiment, only the feedback receiving station has stored therein the codes 18a, 18b, 18c, 18d of the codebook 20. In the exemplary system of Fig. 2, the code 18c is the reference code of the indicator set 14b.

The code indicating elements in the indicator sets 14a, 14b, 14c, 14d have a bit length which depends on a transition probability for a transition from the reference code to respective code associated with the code indicating element. According to an illustrative embodiment, the code indicating elements 15a, 15b, 15c, 15d are stored in a table as is indicated in Fig. 2 and are sorted according to the transition probability. In the exemplary embodiment, the code indicating element with the highest transition probability, i.e. the code indicating element 15a of the reference code 18c is located on top of the table of the indicator set 14b. However, it should be noted that the picture drawn in Fig. 2 is for illustrative purposes only and that the code indicating elements may be stored in any suitable manner which allows unique identification of the corresponding code.

The feedback receiving station 10 comprises a receiver 22 for receiving the feedback message 6 containing the code indicating element which corresponds to the feedback code that best describes the actual channel state as determined by the feedback message sending station 2.

The feedback receiving station further comprises a storage device 24 having stored therein an indicator set 114a, 114b, 114c, 114d of code indicating elements for each of said codes of said plurality of codes 18a, 18b, 18c, 18d. According to an embodiment, the indicator sets 114a, 114b, 114c, 114d stored in the feedback receiving station 10 are identical to the indicator sets 14a, 14b, 14c, 14d stored in the feedback sending station 2.

Further, the feedback receiving station 10 comprises a set selector 26 for selecting - in the exemplary situation described - an indicator set 114b out of said indicator sets 114a, 114b, 114c, 114d depending on the currently used code such that the reference code 18c of the Selected indicator set 14b is the code which is currently used by the feedback receiving station 10.

The feedback receiving station 10 further comprises a code selector 28 for selecting a corresponding feedback code out of said codebook depending on both, said code indicating element of the feedback message 6 and a currently used code 18c which is currently used by the feedback receiving station 10 as a description of the channel. It should be understood that selecting a feedback code out of the codebook 20 depending on a currently used code 18c generally includes selecting the feedback code out of the codebook depending on the respective code indicating element 15a of the currently used code 18c. The code selector 28 is configured for selecting said feedback code out of said codebook 20 by using the selected indicator set 114b which has been selected by the set selector. For example, the feedback sending station 2 may determine that the actual channel state is best described by code 18b which may be represented by code indicating element 15c of the indicator set 14b. In this case the code indicating element representing code 18b as feedback code would be included in the feedback message 6. On the receiver side, i.e., in the feedback receiving station 10, the set selector 26 determines that the currently used code is code 18c and hence the indicator set 14b/114b has to be used for retrieving the feedback code, i.e., code 18b from code indicating element 15c which has been fed back with the feedback message 6.

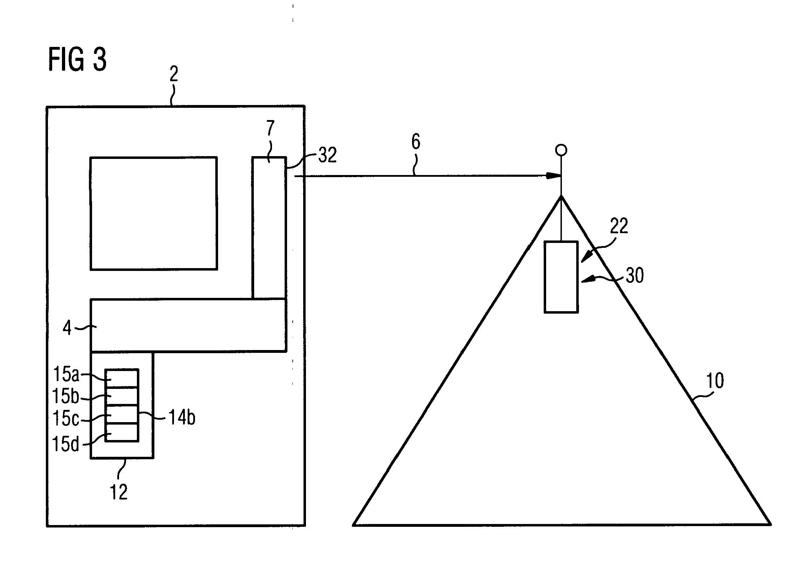

As explained above, according to an illustrative embodiment, the feedback sending station may have stored therein an indicator set for each code of the codebook. According to a further illustrative embodiment, shown in Fig. 3, the feedback receiving station may comprise a transmitter 30 for sending to a feedback sending station 2 at least one indicator set of code indicating elements. For example the indicator set 14b including the code indicating elements 15a, 15b, 15c, 15d may be sent to the feedback sending station 2 in the case that the currently used code is the code 18c corresponding to the reference code indicating element 15a of indicator set 14b. It should be noted that the feedback receiving station 10 in Fig. 3 contains the same components as the feedback receiving station 10 in Fig. 2, however, in Fig. 3 the further components are not depicted for clarity.

The feedback sending station comprises a respective receiver 32 for receiving the indicator set 14b sent by the feedback receiving station and storing the received indicator set 14b in the storage 12. According to an illustrative embodiment shown in Fig. 3, the storage 12 may be configured for storing only a single indicator set, namely the currently used indicator set the reference code of which is the currently used code. It should be understood that the transmitter 7 and receiver 32 of the feedback sending station 2 may be formed by a common transceiver and that the transmitter 30 and the receiver 22 of the feedback receiving station 10 may be formed of a common transceiver. Each transmitter/receiver may comprise one or more transmit/receive antennas.

According to an illustrative embodiment, the feedback receiving station may transmit to the feedback sending station the currently used indicator set upon each change of the indicator set. Thus the feedback sending station needs to store only one indicator set. However, in contrast to storing all indicator sets in the feedback sending station, transmitting the indicator set allocates downlink resources.

It should be noted that Fig. 2 and Fig. 3 are only schematic and show some components according to illustrative embodiments of the feedback sending station and the feedback receiving station. However, this does not require the components to be physical components. Rather, at least some of the components may be implemented in software.

In the following, illustrative embodiments regarding the construction of the adaptive codebook are described.

Adaptive codebook construction

Analytical framework

The downlink temporally correlated channel can be modeled using a Markov chain. Adaptive vector quantization (AVQ) is a vector quantization with memory, in which the quantizer output depends on prior inputs as well as the current input. Herein, state variables are used to depict the influence of the past on the current operation of the quantizer. As a result, the AVQ is to be effectively formulated as the state transition and state dependent encoding, which can be considered as a Markov chain. The important definitions which will appear in the process of analysis are as follows:

$H_p$     downlink channel state information (CSI) at time p, $H_p \in HS$, where HS is the channel space

$J_p$     channel state at time p, $Jp \in JS = \{1,...,N_t\}$, wherein JS is the channel state space

C     codebook containing $N_t$ channel profiles

$C_i$     $i^{th}$ member of the codebook C, $i \in \{1,...,N_t\}$

$C^a$     adaptive codebook, $C^a = C$

$C^a_i$     $i^{th}$ member of the adaptive codebook $C^a$, $i \in \{1,...,N_t\}$

where $N_t$ is the size of the codebook which corresponds to the number of channel states. It should be noted that the adaptive codebook $C^a$ is equal to the complete codebook C in that they share the same codes as their elements, but the individual code index of $C^a$ is different from that of C. In other words, the adaptive codebook $C^a$ can be acquired by sorting codebook entries of C with respect to a certain criterion.

The CSI quantization process is summarized as follows. The CSI quantizer maps the downlink CSI Hp at time p onto a member of the codebook C and provides its index $J_p$ as output. The codebook C is acquired by partitioning the channel space into $N_t$ regions, which are called Voronoi cells/encoding regions $\{R_i\}$. The codebook entries (codewords) and the encoding regions have an one-to-one relationship. Therefore, the CSI quantizer operation (1) below implies (2) in practice.

$$C_i = Q(H_p), \quad i \in \{1,...,N_t\} \tag{1}$$

$$J_p = i \quad \text{if} \quad H_p \in R_i, \quad i \in \{1,...,N_t\} \tag{2}$$

The stationary probability of the Markov chain is defined as

$$P_i = \Pr\{J_p = i\} = \Pr\{H_p \in R_i\}, \tag{3}$$

and the transition probability of the Markov chain is defined as

$$P_{i,j} = \Pr\{J_p = i | J_{p-1} = j\} = \Pr\{H_p \in R_i | H_{p-1} \in R_j\}, \tag{4}$$

where in equations (3) and (4) $i,j \in \{1,...,N_t\}$.

Now the adaptive vector quantization (AVQ) is modeled by a Markov chain. Therefore, the downlink temporally correlated channel can be treated as a Markov source and makes it eligible for data compression techniques. The basic idea of the adaptive codebook is to re-arrange the order of the codewords based on the current chosen codeword such that the most probable next state codeword is located at the beginning of the codebook.

It should be noted that rearranging the codewords herein generally includes rearranging the codewords as such as well as rearranging the respective code indicating elements.

The codewords are sorted in decreasing order of their transition probabilities. Then the statistics of the code indices to be fed back are transformed to show that the decreasing order of transition probabilities is equal to the increasing order of code indices of the adaptive codebook. Hence, the source encoding scheme can be used to perform the efficient representation of feedback messages. Simply speaking, if some source symbols are known to be more probable than others, then this feature may be exploited in the generation of a source code by assigning short code words to frequent source symbols, and long code words to rare source symbols. We refer to such a source code as a variable-length code. Therefore, a variable-length code can be used to encode a feedback message.

An adaptive codebook $C^a[J_p]$ for the given Markov state $J_p$ at time p can be constructed as follows.

$$C^a[J_p] = \{C_i \mid \forall i \in JS, \quad C^a_1 = C_{Jp},$$
$$P_{i,Jp} > P_{j,Jp} \text{ for } i,j \in \{i,j \in JS \mid i < j\}\} \tag{5}$$

The first codeword of the adaptive codebook is the code $C_{J_p}$ chosen at time p, and other codewords are sorted in the decreasing order of the transition probability. The transition probabilities can be estimated by Monte-Carlo simulations. However, this can be a nontrivial task when the size of codebook is big, since $N_t$ adaptive codebooks or $N_t$ indicator sets of code indicating elements are required in total. The illustrative embodiment outlined in section "Adaptive codebook design" below provides a simple but effective alternative method, which is based on heuristics.

Adaptive Codebook Design

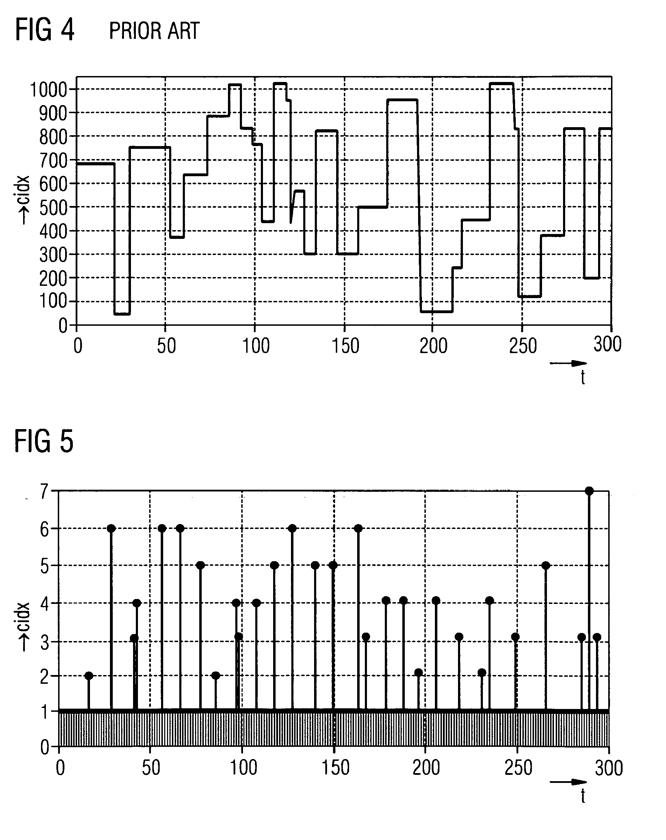

The proposed adaptive codebook design method does not exploit any channel statistical information. It takes an existing codebook C of size $N_t$ and reorganize it such that its codewords are arranged in the decreasing order of the transition probability. This adaptive codebook $C^a$ is an adaptive version of the codebook C, in which the smaller code indices are allocated to the more probable next state codes for the given current state code. As a result, feed back requires only small code indices, which dramatically reduces the required feedback amount. Fig. 4 depicts a snapshot of the typical code index behavior of the code index "cidx" over time "t". In an example, a 10 bit codebook is used to quantize the Urban Macro channel $H \in CS^{2 1}$ (CS = set of the complex numbers, sometimes denoted as £ ) with the mobile speed of 3 m/s, and the resulting code indices are plotted for every OFDM symbol duration $T_s$ ($T_s$=71.37$\mu$s). It can be observed that the code indices are spread over the whole code index range [1,1024], which requires 10 bit feedback to represent the code index properly whenever the code index transition happens. Fig. 5 shows a typical code index behavior of the code index "cidx" over time "t" with the adaptive codebook method in use. As can be seen in Fig. 5, the code indices are congested in the lower part of the code index range [1,7] only. It means that the code index, which usually covers the whole code index range, can be mapped into a much smaller region by the transformation performed by the adaptive codebook. In this case, we do not have to allocate 10 bits to the feedback, but need a much smaller number of bits. The amount of the required feedback can be further reduced by introducing a source-coding scheme.
Possible design rules for embodiments of the adaptive codebook, which can induce the transformation of the code index behavior depicted above, are summarized as follows.

1. First design rule. The code index transition is supposed to happen not very frequently for the slowly-varying channel. When the code index does not change compared with the previous time step, sending a code index is not necessary and the feedback resources can be saved.

2. Second design rule. When the code index transition is not avoidable, the code index to feed back should be located in the initial/partial range of the whole code index spectrum. This condition is required to reduce the amount of feedback when it is necessary. If the code index can be restricted to feed back to a small number with respect to the maximum code index, the required feedback resources can be reduced.

3. Third design rule. According to an illustrative embodiment, the frequency of the code index to feed back is distinctly non-equally distributed rather than equally distributed, and would be better to be eligible for ordering in a predictable manner. The statistical properties of the frequency of the code index can be exploited to compress the data. In an illustrative embodiment, a source-coding scheme is used when encoding the feedback messages. According to the information theory, the entropy of the source establishes the fundamental limit on the removal of redundancy from the data. Basically, data compaction is achieved by assigning short descriptions to the most frequent outcomes of the source output and longer descriptions to the less frequent ones. Some source-coding schemes require the exact transition probabilities of codebook entries, and some schemes need to know the order of the transition probabilities only. The latter information can be acquired without efforts to get the precise transition probabilities, if the codewords can be sorted by using a certain criterion. For example, the subspace distance measure, e.g., the chordal distance, can be used for ordering.

The adaptive codebook construction procedure is as follows. It should be noted that the adaptive codebook can be constructed offline, based on measurement data or simulations.

Codebook Construction Phase

The codebook construction algorithm is performed for given training sequence T to get $N_t=2^{n_t}$ codewords. For example, according to an illustrative embodiment, the modified Linde, Buzo, and Gray (mLBG) algorithm is performed for codebook generation. The mLBG algorithm takes T and $N_t$ as input parameters, and provides a codebook C as an output. Thus, this can be formulated as follows.

$$(C) = mLBG(T, N_t) \qquad (6)$$

Adaptive Codebook Construction Phase

An adaptive codebook $C^a[J_p]$ for the given Markov state $J_p$ at time p as a sorted version of C is constructed as follows:

$$C^a[J_p] = \{C_i \mid \forall i \in JS, \ C^a_1 = C_{Jp},$$

$$\Delta d_c(C^a_i) < \Delta d_c(C^a_j) \text{ for } i,j \in \{i,j \in JS \mid i < j\}\},$$

$$\text{where } \Delta d_c(C_k) := d_c(C_1,C_k). \qquad\qquad (7)$$

In this case, we choose the chordal distance $d_c(T_i,T_j) = [1/(\sqrt{2})] \|T_i \ T^H_i - T_j \ T^H_j\|_F$ as the distance measure, but this can be replaced by any distance measure as long as it corresponds with the metric used for the codebook construction and the quantizer. Herein $T^H$ denotes the Hermitian transpose of T. The comparison with (5) reveals the fact that the transition probability is replaced by the chordal distance, which simplifies the process. Monte-Carlo simulation results have confirmed its validity for the simulated cases.

The adaptive codebook $C^a$ is same as the codebook C in its elements. It is different from C in the order of its codewords. The codewords of $C^a[J_p]$ are sorted such that their chordal distances from the initial codeword $C_{Jp}$ are in the increasing order. This order is equal to the decreasing order of the transition probability. It should also be noted that only the table of the code indices is necessary to build the adaptive codebook, once the elements of the codebook C are given. According to an illustrative embodiment, the adaptive codebook is nothing more than a re-ordered version of the codebook.

Next, an illustrative operation procedure of the adaptive codebook is described.

1. Initial Code Assignment Mode

In a first step, the time index is set to p = 0. The initial codeword assignment is performed with the codebook C, which requires $n_t$ feedback bits. The quantization procedure with C can be rewritten as

$$C_{Jp}^{opt} = Q(H_p,C) = \arg \min_{C_i \in C} d_c(U_p^{(S)},C_i), \qquad (8)$$

where $U_p^{(s)}$ is the column space basis vectors spanning the column space of $H_p$ ($H_p$: $N_{tt} \ N_{rx}$, $U_p^{(s)}$: $N_{tt} \ N_{rx}$, wherein each of $N_{BS}$ base stations have $N_{tx}$ antennas and each of the $N_{MS}$ mobile stations have $N_{rx}$ receive antennas). In this case we adopt the subspace based channel quantization method as one of possible use cases.

This step is required only when the adaptive codebook operation starts or the code transition tracking mode has failed by interruption or disruption.

2. Code Transition Tracking Mode

a. The adaptive codebook $C^a[J_p]$ for the given Markov state $J_p$ at time p can be acquired by looking up the predefined table which is provided by (7).

b. Code transition tracking time elapses. Set p = p+1.

c. The quantization procedure is performed with the adaptive codebook $C^a[J_{p-1}]$ which is acquired by the step (a). For the slowly varying channel, the adaptive code index is expected to be 1 for the most cases, which indicates the same code as the previous time, and to be restricted to the small number, if it is not 1, as the design rule 2 addresses this issue. The code index 1 can be encoded to zero message (no feedback is transferred), and encoding can be done in a smart way by using a source-coding scheme to reduce the feedback overhead. This will be discussed in detail in section "Feedback encoding" below.

$$C_{J_p}^{opt} = C_{J^a_p}^{a \ opt} = Q(H_p, C^a[J_{p-1}]) = \arg \min_{C^a_i \in C^a[J_{p-1}]} d_c(U_p^{(S)}, C^a_i) \quad (9)$$

Here $J^a_p$ is the optimum code index of the adaptive codebook $C^a[J_{p-1}]$, which corresponds to the code index $J_p$ of the original codebook C. $J^a_p$ needs to be fed back, and our design goal of the adaptive codebook is to ensure $J^a_p << J_p$.

d. If any reason to initiate the adaptive codebook operation is detected, go to step 1 (initial code assignment mode). Otherwise, set the state transition as (10) and go back to step (a) (code transition tracking mode), which allows the adaptive codebook $C^a[J_p]$ at the next time index to be ordered with the most recent codeword $C_{J_p}^{opt}$ as the initial codeword.

$$J_p = j, \ if \ C_{J_p}^{opt} = C_j \quad (10)$$

Feedback encoding

According to an illustrative embodiment, the feedback message (code index) is encoded before it is being sent over the feedback link. For the feedback encoding process, a source-coding technique can be exploited to reduce the average feedback rate by using variable-length codes, as described by C. Simon and G. Leus, "Feedback Reduction for Spatial Multiplexing with Linear Precoding" in Proc. of the International Conference on Acoustics, Speech, and Signal Processing (ICASSP 2007), pp. III/33-III/36, Honolulu, Hawaii, Apr. 2007). The schemes introduced in this paper are lossless data compression techniques, whereas other prior arts adopt a fixed-length codeword scheme in which the feedback message is encoded in a lossy fashion.
According to an illustrative embodiment, two different underlying system models are assumed. The first model adopts a non-dedicated feedback channel. In this case, there is no dedicated uplink resource for the feedback, and the feedback link can be also used for data transmission. As a result, the receiver needs to know when the codeword ends and when the data part starts. The second model assumes that there exists a dedicated feedback channel which is used to carry the feedback messages only. In this case, the required energy for the feedback can be reduced by reducing the average feedback overhead.
Two models are briefly explained below. Each model imposes different requirements for conducting a source-coding scheme. The second model is assumed for the inventive method, since it requires only the order of the transition probabilities for the encoding process and it shows better feedback overhead reduction performances.
Non-dedicated Feedback Channel
A non-dedicated channel requires the feedback codes to satisfy the prefix condition. A codeword is not allowed to contain any other codeword as a prefix. However, the complete information about the transition probabilities is necessary to design a prefix-free code. One important class of prefix-free codes is the Huffman code.

Dedicated Feedback Channel

In case of the dedicated feedback channel model, there is no requirement to use prefix-free codes, as the beginning and the end of the codeword can be easily determined. This property allows the use of non-prefix-free (NPF) codes which do not satisfy the prefix condition. NPF codes do not require the knowledge of the precise transition probabilities, but just need the order of the transition probabilities. The decreasing order of the transition probabilities is known to be same as the increasing order of the chordal distances with respect to the initial codeword. Therefore, the adaptive codebook indices can be encoded by using the NPF coding scheme, in the given increasing order. The basic principle of the NPF encoding is as follows.
We assign no codeword (null) to the most probable codebook entry, and gradually longer codewords to the other codebook entries in the decreasing order of probability. The most probable codebook entry of the adaptive codebook is the code which is chosen at the previous step (code index 1), and other codes are sorted in the decreasing order of probability (increasing order of the chordal distance), which makes the application of the NPF coding straightforward.

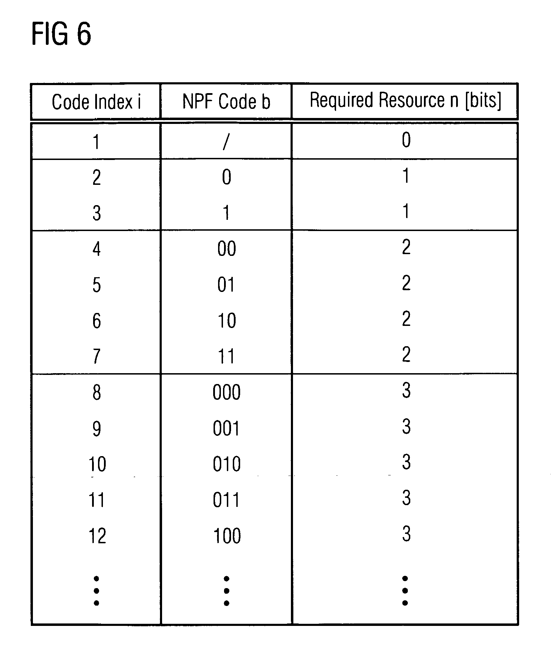

The NPF encoding example of the adaptive codebook indices is depicted in the Table of Fig. 6. The feedback overhead in bits, which is denoted by n, can be found as follows.

$$n = \lfloor \log_2 (i+1) - \varepsilon \rfloor, \qquad\qquad (11)$$

where i is the code index of the adaptive codebook and $\varepsilon$ is a small number which satisfies $\varepsilon > 0$. The NPF code corresponding to the code index i is formulated as follows.

$$b = bin(i-2^n, n) \qquad\qquad (12)$$

bin(a,n) converts decimal number a to binary number, using at least n bits.

Implementation and Advantages

Implementation Example

One exemplary implementation is described below, which follows the principles of the illustrative embodiments and principles explained herein. The base stations and the mobile stations have knowledge of the predefined codebook C and the corresponding adaptive codebook $C^a$. The adaptive codebook can be acquired offline, e.g. according to the Equation (5) or (7). According to an illustrative embodiment, the BSs and MSs need to save the codebook C and the table of the adaptive codebook indices only. The dedicated feedback channel in the uplink is assumed.

At the initial phase (initial code assignment mode), the MS needs to perform the channel quantization process by using the whole codebook C. In this case, $n_t$ bits are required for the feedback. At the next time for the channel quantization (code transition tracking mode), the MS uses the adaptive codebook, the first codeword, i.e. the reference code, of which is the codeword chosen in the previous time. When the chosen codeword is same as the previous one (code index = 1), no feedback message is sent back. The feedback message is encoded according to the NPF coding scheme. When it is not possible to use the variable length codes for the feedback due to the standard or the implementation issue, the fixed number of bits can be allocated to encode a few initial code indices only, instead of using the variable length code, e.g., the NPF code. As it will be shown in the section "performance evaluation" below, the first eight code indices cover more than 99 % of the whole cases for the slowly-varying channel, which leads to a significant reduction of feedback resources without adopting the source-coding scheme.

The required feedback resource is reduced, thanks to the properties of the adaptive codebook and the data compaction scheme. On the other hand, the BS is able to decode the feedback message without any extra information, since it can trace the adaptive behavior of the codebook. The code transition tracking mode can be continued as long as there is no interruption of feedback messages from the MS. According to an illustrative embodiment, when there is no reception of the feedback messages for long time which is enough to lose track of the channel, a switch to the initial code assignment mode is performed.

Performance Evaluation

We evaluated the performance of the method incorporating the above described illustrative embodiments by Monte-Carlo simulations. Simulations have been performed for the 2 BSs - 2 MSs case. Two BSs are cooperating to transmit data signal for two MSs through the same resources at the same time. Both BSs and MSs have a single antenna, so it yields a 2 2 overall channel matrix. An extended spatial channel model (SCMe) is used for the simulations and the proposed methods are tested for an Urban Macro channel with a mobile speed of 3 m/s and 10 m/s. The system performance is evaluated in terms of the received SINR at the MS. Simulations are performed for 30,000 channel realizations and the cumulative distribution function (cdf) at one MS is obtained. OFDMA is assumed as the data transmission scheme and we focus on one subcarrier. The transmit power at the BS is set to be 10 W and it is equally allocated to 1201 subcarriers.

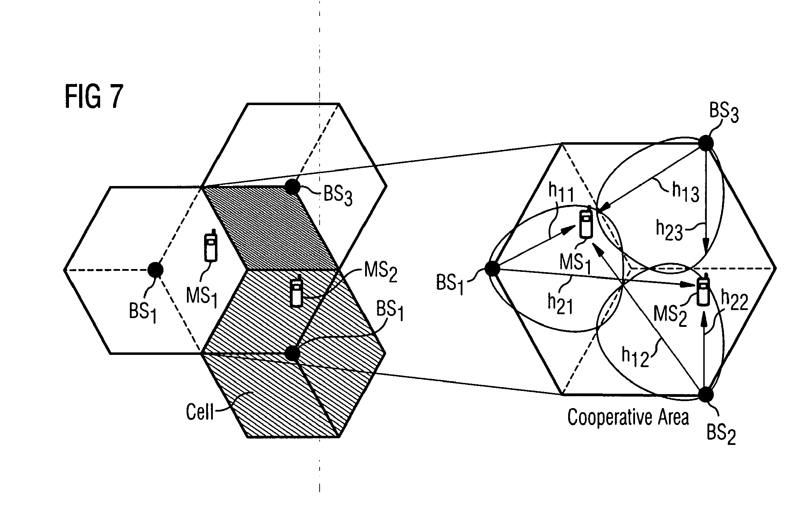

The cooperative area (CA) topology is shown in Fig. 7. As in the conventional cellular topology, one cell is composed of three sectors and the hexagonal area, which is composed of three sectors which are served by three BSs, BS1, BS2 and BS3, forms a CA. Two MSs, MS1 and MS2, in the CA are served by three BSs simultaneously. In our case of the 2 BSs - 2 MSs environment, two BSs which maintain the strongest two links with MSs are chosen for downlink transmission. In Fig. 7, the downlink from base station j to mobile station i is denoted by $h_{ij}$, i = 1, 2 and j = 1, 2, 3. The cell radius is 600 m and MSs are equally distributed in the CA for every drop. The zero-forcing filter is assumed for the precoding process, based on downlink channel information which is either perfect channel (pCh), or is provided by a downlink channel estimation method which is shared by the BSs through a prompt and error free backbone network (centralized CA, cCA), or is acquired by the analog pilot retransmission method (distributed CA, dCA), or is captured and reconstructed by looking up an $n_t$ bit adaptive codebook (aCB). In case of the adaptive codebook, the channel is monitored and quantized for every symbol and the NPF coding scheme is used to encode the feedback message. The feedback message is being sent only when it is necessary, e.g., when the adaptive code index is not 1. In the simulated example, the BSs have been assumed to be aware of the large-scale fading of the channel, and the channel quantization processes (9), (10) have been assumed to be based on true channel information. The codebooks are acquired by the modified LBG VQ algorithm and the adaptive codebook design method. The feedback link is error free and delay free.

Simulation has been performed for a mobile speed 3 m/s case (case I) and the 10 m/s case (case II), respectively. In case of the 3 m/s case (Doppler spread 26 Hz), the adaptive codebook (aCB) performs very closely to the perfect channel case (pCh) with only 0.7 dB degradation in terms of 50 % outage SINR, which costs just 0.23 bits/symbol. This means that the adaptive codebook scheme achieves the same performance as the 10 bit codebook case (10 bits/symbol) with less than 2.3 % of the feedback overhead when $v_{MS}$ = 3 m/s. In case of the 10 m/s case (Doppler spread 86.7 Hz), the aCB case performs 0.8 dB away from the pCh case with 0.66 bits/symbol feedback overhead. The simulation results prove the efficiency of the adaptive codebook scheme.

In Section "Adaptive Codebook Design" above, three design rules of the adaptive codebook are proposed. In the following, a check is performed how the design rules are satisfied by the proposed adaptive codebook design method.

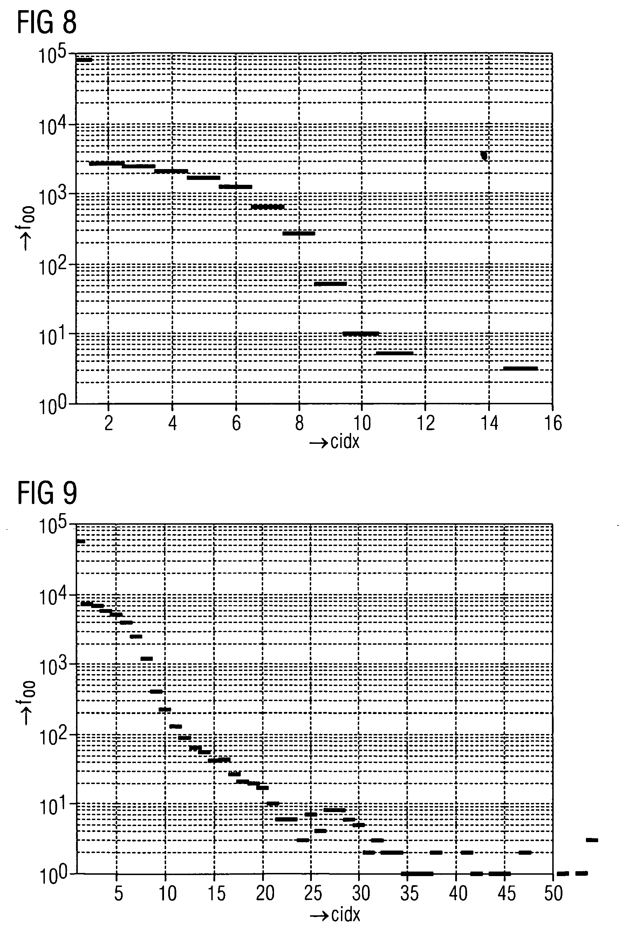

1. Regarding the first design rule, the code index transition is supposed to happen not so frequently for the slowly-varying channel. The frequency of the code index transition is dependent on the channel and the resolution of the channel quantizer, so the frequency is an invariable property which can not be changed by the codebook design scheme for the given codebook size. Fig. 8 and 9 show the histogram of the adaptive codeword indices, i.e. the frequency of occurrence "foo" of the respective index over the index "cidx", which have been acquired during the process of simulations with $v_{MS}$ = 3 m/s and $v_{MS}$ = 10 m/s, respectively. Monte-Carlo simulation has been used to collect 90,000 code indices which represent the 10 bit channel ($H \in CS^{2\,1}$) quantization results for the Urban Macro channel. According to the working mechanism of an illustrative embodiment of the adaptive codebook, the code index 1 means no codeword transition with respect to the previously selected codeword. Simulation results show that the code index transition events do not happen for 87.8 % and 62.5 % of time, in case of $v_{MS}$ = 3 m/s and $v_{MS}$ = 10 m/s, respectively. We should note that we do not have to allocate any feedback resource to the code index 1, when adopting a dedicated feedback channel.

2. Regarding the second design rule, when the code index transition is not avoidable, the code index to feed back should be located in the initial/partial range of the whole code index spectrum. The whole code index spectrum spans 1024 in case of the 10 bit codebook. Fig. 8 and 9 show that the most of the adaptive code indices are congested in the first 8 indices. The overall frequency ratio of the code index range [1,8] is 99.9 % and 98.6 % for $v_{MS}$ = 3 m/s and $v_{MS}$ = 10 m/s, respectively.

3. Regarding the third design rule, the frequency of the code index to feed back should be distinctly nonequally distributed rather than equally distributed, and would be better to be eligible for ordering in a predictable manner. The frequency of the code index is not equally distributed, according to Fig. 8 and 9. The code index of the adaptive codebook is ordered in the decreasing order of its frequency (transition probability), up to the code index 11 ($v_{MS}$ = 3 m/s case) and 21 ($v_{MS}$ = 10 m/s case). The exceptional cases beyond this point can be neglected due to its rare incidence. The simulation results confirm the validity of using the chordal distance to order the codewords of the adaptive codebook, instead of the actual transition probability.

Advantages

This section describes how the invention improves earlier solutions. As explained in the previous sections, the proposed adaptive codebook can be built offline prior to the system deployment. The cost for the system is extra data storage at MS and BS for the adaptive code index table of size $N_t N_t$ ($N_t$ is the codebook size). The elements of the table are, however, natural numbers (1,2,3,...) which do not require much space. The advantages which can be acquired in return for this low cost are as follows.

•    The proposed scheme is ultra-efficient. For example, our simulation results show that in accordance with illustrative embodiments, the 10 bit codebook performance can be achieved with only 2.3 % of the required resource by adopting the proposed scheme.

•    The proposed scheme is applicable to any system as long as there exists the correlation in the channel. The proposed

## EP 2 159 978 A1

scheme can be exploited to reduce the feedback overhead for systems with temporally correlated channel or for multi-carrier transmission systems like OFDM. In the latter case, the adaptive codebook scheme can be apply over subcarriers to make use of the correlation over adjacent carrier frequencies.

- The proposed scheme makes the feedback mechanism less susceptible to the feedback delay or the feedback error. Since the codewords are always arranged in accordance with the chordal distance (the transition probability), the outdated or corrupted code index information would not affect the system performance significantly. The incorrect codeword falls into the neighborhood of the correct one, which leads to the only slightly degraded performance.
- Illustrative embodiments of the proposed adaptive codebook scheme which employ lossless techniques require no adjusting procedure due to lossy encoding.
- The proposed scheme reduces the code selection time & complexity at the MS. The complexity of the code selection process at the MS can be greatly reduced by limiting the scope of the codewords for the codeword selection to the most probable candidates. For example, according to an illustrative embodiment, the MS should search only a predetermined number of codewords which
predetermined number is less than the number of codes in the codebook. In the above example, searching the first eight codewords of the adaptive codebook of size 1024 would be sufficient, since these eight codewords cover 98.6 % of the whole cases for Doppler spread 86.7 Hz.

Conclusion

According to illustrative embodiments of the herein disclosed subject matter, an adaptive codebook design method is proposed together with the feedback encoding method, as a means to reduce feedback overhead by exploiting the temporal correlation of the channel. According to an illustrative embodiment, the adaptive codebook sorts the codewords in the increasing order of the chordal distance with respect to the initial codeword, which is the codeword chosen at the previous time step. The adaptive codebook design method converts the code index behavior from being widely spread over the whole code index spectrum to being concentrated in the initial part of the spectrum. This allows for the use the lossless data compression method to encode the feedback messages. As a result, the adaptive codebook scheme in cooperation with the NPF encoding requires a much less feedback overhead compared with the state of the art techniques in return for a slightly increased cost of storing the tables defining the adaptive codebook or, according to illustrative embodiments, the tables of the indices of the adaptive codebook.

According to embodiments of the invention, any component or combination of components of the feedback sending station or the feedback receiving station, e.g., the message generator, the code selector or the set selector may be provided in the form of respective computer program products which enable a processor to provide the functionality of the respective elements as disclosed herein. According to other embodiments, any component or combination of components of the feedback sending station or the feedback receiving station, e.g., the message generator, the code selector, the set selector, the receiver, the storage devices or the transceiver may be provided in hardware. According to other - mixed - embodiments, some components may be provided in software while other components are provided in hardware.

It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

List of reference signs:

| 2 | feedback sending station |
|---|---|
| 4 | message generator |
| 6 | feedback message |
| 7 | transmitter |
| 8 | channel |
| 10 | feedback receiving station |
| 12 | storage device |
| 14a, 14b, 14c, 14d | indicator set |
| 15a, 15b, 15c, 15d | code indicating element |
| 18a, 18b, 18c, 18d | code |
| 20 | codebook |
| 22 | receiver |
| 24 | storage device |

| 114a, 114b, 114c, 114d code | indicating element |
|---|---|
| 26 | set selector |
| 28 | code selector |
| 30 | transmitter |
| 32 | receiver |

List of abbreviations

| LTE | long term evolution |
|---|---|
| SCMe | extended spatial channel model |
| aCB | adaptive codebook |
| BS | base station |
| MS | mobile station |
| SINR | signal to interference and noise ratio |
| MIMO: | multiple input multiple output |
| OFDM: | orthogonal frequency division multiplexing |
| AVQ: | adaptive vector quantization |
| NPF: | non prefix free |
| CSI: | channel state information |
| CDI: | channel directional information |
| CQ: | channel quantization |
| SU: | single user |
| MU: | multiple user |
| CA: | cooperative area |

**Claims**

1. Feedback sending station (2) comprising:

    a message generator (4) for generating a feedback message (6) indicating a channel state by using a codebook (20) containing a plurality of codes (18a, 18b, 18c, 18d),

    wherein each of said plurality of codes is indicative of a corresponding channel state;

    said feedback message (6) referring to one code of said plurality of codes as a feedback code;
    said feedback message (6) having a bit length which depends on a probability for a transition from a currently used code to said feedback code to which the feedback message refers.

2. Feedback sending station (2) according to claim 1,
    wherein said feedback message (6) contains a code indicating element representing said feedback code in the case that the feedback sending station (2) currently uses said currently used code;
    wherein the bit length of the code indicating element of the feedback code depends on said probability for a transition from said currently used code to said feedback code.

3. Feedback sending station (2) according to claim 2,

    further comprising a storage device (12) for storing therein an indicator set (14b) of code indicating elements each of which represents one code of said plurality of codes in the case that the feedback sending station (2) currently uses said currently used code;

    wherein each code indicating element in said indicator set (14b) has a bit length which depends on a probability for a transition from said currently used code to respective code associated with the code indicating element.

4. Feedback sending station according to claim 3,
    wherein said storage device (12) has stored therein an indicator set (14a, 14b, 14c, 14d) of code indicating elements for each of said codes (18a, 18b, 18c, 18d) of said plurality of codes;
wherein each indicator set (14a, 14b, 14c, 14d) refers to a different one of said codes as a reference code;
wherein each of the code indicating elements of an indicator set represents one code of said codebook (20) in the case that feedback sending station (2) currently uses the reference code of this indicator set as the currently used code; and
wherein in each indicator set (14a, 14b, 14c, 14d) each of the code indicating elements has a bit length which depends on a probability for a transition from the reference code to respective code associated with the code indicating element.

5. Feedback receiving station (10) comprising:

   a receiver (22) for receiving a feedback message (6) containing a code indicating element;
   a codebook (20) containing a plurality of codes;
   a code selector (28) for selecting a corresponding feedback code out of said codebook depending on both, said code indicating element and a currently used code.

6. Feedback receiving station (10) according to claim 5, further comprising:

   a storage device (24) having stored therein an indicator set (114a, 114b, 114c, 114d) of code indicating elements for each of said codes of said plurality of codes;

   wherein each indicator set (114a, 114b, 114c, 114d) refers to a different one of said codes as a reference code;
   wherein each of the code indicating elements of an indicator set (114a, 114b, 114c, 114d) represents one code of said plurality of codes in the case that feedback sending station (2) currently uses the reference code of this indicator set as the currently used code; and
   wherein in each indicator set (114a, 114b, 114c, 114d) each of the code indicating elements has a bit length which depends on a probability for a transition from the reference code to respective code associated with the code indicating element.

7. Feedback receiving station (10) according to claim 6, further comprising:

   a set selector (26) for selecting an indicator set out of said indicator sets;

   wherein the reference code of the selected indicator set is the code which is currently used by the feedback receiving station (10); and

   said code selector is configured for selecting said feedback code out of said codebook by using the selected indicator set.

8. Feedback receiving station (10) according to claim 5,

   further comprising transmitter (30) for sending to a feedback sending station at least one indicator set (14b) of code indicating elements;

   wherein in each indicator set (14b) each code indicating element represents one code of said plurality of codes in the case that said feedback sending station (2) uses a reference code of the indicator set as the currently used code;
   wherein in each indicator set (14b) each code indicating element has a bit length which depends on a probability for a transition from the reference code to the respective code associated with the code indicating element.

9. Feedback sending station (2) according to one of claims 1 to 4 or feedback receiving station (10) according to one of claims 6 to 8,
   wherein the probability for a transition from said currently used code to said feedback code is represented by a distance of the feedback code and the currently used code in a metric used for codebook construction of said codebook (20).

10. Feedback sending station (2) according to one of claims 2 to 4 or feedback receiving station (10) according to one of claims 5 to 8,
   wherein each code indicating element is a compressed code index obtained with a source coding scheme wherein code indices are associated with descriptions that are the shorter the higher the probability is for a transition from the currently used code to the respective code associated with the code index.

11. Method for indicating a channel state with a feedback message (6), the method comprising:

providing a codebook (20) containing a plurality of codes, wherein each of said plurality of codes is indicative of a corresponding channel state;
generating said feedback message (6) by assigning to said feedback message (6) a code indicating element representing a desired feedback code which best describes the current channel state, wherein the bit length of the code indicating element of the feedback code varies according to on a probability for a transition from a currently used code to said feedback code.

12. Method according to claim 11, further comprising

retrieving an indicator set (14b) of code indicating elements, wherein said indicator set has said currently used code as a reference code; and
selecting from said indicator set (14b) the code indicating element which corresponds to the feedback code;

wherein each code indicating element of said indicator set (14b) represents one code of said codebook (20) in the case that feedback sending station currently uses said reference code,
wherein each code indicating element in said indicator set (14b) has a bit length which depends on a probability for a transition from a reference code of the indicator set to respective code associated with the code indicating element.

13. Method for decoding a feedback message containing a code indicating element, the method comprising:

providing a codebook (20) which contains a plurality of codes each of which is indicative of a corresponding channel state;
selecting, as a feedback code, a code out of said codebook depending on both, a currently used code and said code indicating element.

14. Method according to claim 13,

retrieving an indicator set (114b) of code indicating elements, the indicator set (114b) referring to said current code as a reference code, wherein each of the code indicating elements of said indicator set (114b) represents one code of said plurality of codes in the case that the currently used code is the reference code of the indicator set (114b); and
selecting said feedback code by using said indicator set (114b).

FIG 1

$$\hat{H} = \begin{bmatrix} c_{i_1} & \cdots & c_{iN_{MS}} \end{bmatrix}^T \qquad H = \begin{bmatrix} H_1 & \cdots & H_{N_{MS}} \end{bmatrix}^T$$

EP 2 159 978 A1

FIG 2

FIG 3

**FIG 4**  PRIOR ART

**FIG 5**

# FIG 6

| Code Index i | NPF Code b | Required Resource n [bits] |
|---|---|---|
| 1 | / | 0 |
| 2 | 0 | 1 |
| 3 | 1 | 1 |
| 4 | 00 | 2 |
| 5 | 01 | 2 |
| 6 | 10 | 2 |
| 7 | 11 | 2 |
| 8 | 000 | 3 |
| 9 | 001 | 3 |
| 10 | 010 | 3 |
| 11 | 011 | 3 |
| 12 | 100 | 3 |
| ⋮ | ⋮ | ⋮ |

FIG 7

## FIG 8

## FIG 9

Europäisches
Patentamt

European
Patent Office

Office européen
des brevets

## EUROPEAN SEARCH REPORT

Application Number

EP 08 01 5070

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LEUS G ET AL: "Quantized feedback and feedback reduction for precoded spatial multiplexing MIMO systems" SIGNAL PROCESSING AND ITS APPLICATIONS, 2007. ISSPA 2007. 9TH INTERNATIONAL SYMPOSIUM ON, IEEE, PISCATAWAY, NJ, USA, 12 February 2007 (2007-02-12), pages 1-6, XP031280781 ISBN: 978-1-4244-0778-1 * sections 2, 3, 4, 4.1, 4.2 * * figure 1 * * tables 2, 3 * ----- | 1-14 | INV. H04L25/03 |
| D,X | C. SIMON AND G. LEUS: "Feedback Reduction for Spatial Multiplexing with Linear Precoding" INTERNATIONAL CONFERENCE ON ACOUSTICS, SPEECH AND SIGNAL PROCESSING (ICASSP) 2007 HELD IN HONOLULU, HAWAII, USA, vol. III, 15 April 2007 (2007-04-15), - 20 April 2007 (2007-04-20) pages III-33-III-36, XP002527505 Piscataway, NJ, USA * sections 2, 3, 4, 4.1, 4.2, 4.3 * * figure 1 * * table 1 * ----- -/-- | 1-14 | |

| | | | TECHNICAL FIELDS SEARCHED (IPC) |
|---|---|---|---|
| | | | H04L |

The present search report has been drawn up for all claims

| Place of search | Date of completion of the search | Examiner |
|---|---|---|
| The Hague | 12 May 2009 | Marselli, Marco |

EPO FORM 1503 03.82 (P04C01)

**Europäisches Patentamt**
**European Patent Office**
**Office européen des brevets**

## EUROPEAN SEARCH REPORT

Application Number

EP 08 01 5070

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KIM JEE HYUN ET AL: "Efficient Feedback via Subspace-Based Channel Quantization for Distributed Cooperative Antenna Systems with Temporally Correlated Channels" EURASIP JOURNAL ON ADVANCES IN SIGNAL PROCEEDINGS, vol. 2008, 1 December 2007 (2007-12-01), pages 1-13, XP002527506 Hindawi Publishing Corporation, New York, USA and Cairo, Egypt * section 2 * * figure 1 * ----- | 1-14 | |
| A | EP 1 919 098 A (NTT DOCOMO INC [JP]) 7 May 2008 (2008-05-07) * paragraph [0050] - paragraph [0053] * * figure 5 * ----- | 1-14 | |

| | | | TECHNICAL FIELDS SEARCHED (IPC) |
|---|---|---|---|

The present search report has been drawn up for all claims

| Place of search | Date of completion of the search | Examiner |
|---|---|---|
| The Hague | 12 May 2009 | Marselli, Marco |

EPO FORM 1503 03.82 (P04C01)

# EP 2 159 978 A1

## ANNEX TO THE EUROPEAN SEARCH REPORT
## ON EUROPEAN PATENT APPLICATION NO.

EP 08 01 5070

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2009

| Patent document cited in search report | | Publication date | Patent family member(s) | Publication date |
|---|---|---|---|---|
| EP 1919098 | A | 07-05-2008 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. Simon ; G. Leus.** Feedback Reduction for Spatial Multiplexing with Linear Precoding. *Proc. of the International Conference on Acoustics, Speech, and Signal Processing (ICASSP 2007),* April 2007, III/33-III/36